# FASCICULE DE BREVET EUROPEEN

(11) **EP 2 900 952 B1**
(45) Date de publication et mention de la délivrance du brevet: **01.08.2018**
(21) Numéro de dépôt: 13774733.3
(22) Date de dépôt: 11.09.2013
(51) Int. Cl.: F01P 7/16

(54) **SYSTEME ET PROCEDE DE REFROIDISSEMENT POUR CHAINE DE TRACTION HYBRIDE DE VEHICULE AUTOMOBILE**
KÜHLSYSTEM UND VERFAHREN FÜR EINEN HYBRIDEN ANTRIEBSSTRANG EINES KRAFTFAHRZEUGS
COOLING SYSTEM AND METHOD FOR A HYBRID POWERTRAIN OF A MOTOR VEHICLE

(30) Priorité: 20.09.2012 FR 1258841
(43) Date de publication de la demande: 05.08.2015
(73) Titulaire: Renault S.A.S., 92100 Boulogne-Billancourt (FR)
(72) Inventeur: NGUYEN, Hoang-Giang, F-91130 Ris Orangis (FR); VAN-FRANK, Jean, F-92500 Rueil Malmaison (FR); KETFI-CHERIF, Ahmed, F-78990 Elancourt (FR); DANG-VAN-NHAN, Christophe, F-94800 Villejuif (FR); YU, Robert, F-78180 Montigny Le Bretonneux (FR)
(86) Numéro de dépôt international: PCT/FR2013/052080
(87) Numéro de publication internationale: WO 2014/044952

(56) Documents cités:
- US-A- 5 251 588
- US-A1- 2007 272 173
- US-A1- 2009 145 375
- US-A1- 2010 147 611

## Description

La présente invention concerne le domaine des systèmes de refroidissement pour une chaîne de traction hybride de véhicule automobile.

Un véhicule à propulsion ou traction hybride est équipé d'une première source de propulsion et/ou d'un générateur d'électricité comprenant un moteur thermique et d'une seconde source de propulsion et/ou de transformation d'énergie électrique en énergie mécanique matérialisée par un ou plusieurs moteurs électriques. On peut, par exemple, avoir deux moteurs électriques alimentés par une batterie et chacun implanté au niveau d'une roue arrière du véhicule automobile. De tels moteurs électriques sont généralement appelés « moteurs-roues ».

Le moteur thermique et les moteurs électriques ainsi que les composants électroniques de puissance contrôlant le fonctionnement des moteurs électriques ne nécessitent pas le même degré de refroidissement pour fonctionner dans des conditions optimales. Les plages de températures des fluides caloporteurs circulant dans les circuits de refroidissement des différents éléments ne sont pas les mêmes. Ainsi, la température du fluide de refroidissement en entrée des différents composants électroniques ne doit pas dépasser 80°C, alors que la température en entrée du moteur électrique ne doit pas dépasser 90°C et celle en entrée du moteur thermique est limitée à 105°C.

Pour résoudre les difficultés résultant de ces différences de température, on peut utiliser des circuits de refroidissement distincts. Un premier circuit est alors utilisé pour le refroidissement du moteur thermique. Ce circuit correspond au circuit conventionnel de refroidissement d'un moteur thermique dans un véhicule classique et est équipé d'un premier radiateur. Un second circuit peut alors être prévu pour le refroidissement de l'ensemble ou chaîne de traction électrique comprenant au moins un moteur électrique et différents composants électroniques de puissance.

Un tel système de refroidissement présente un premier inconvénient tenant au fait que la pompe de circulation du second circuit de refroidissement de l'ensemble de traction électrique doit fonctionner en permanence. Un autre inconvénient est dû à la position du radiateur du deuxième circuit de refroidissement qui est généralement placé devant le radiateur du premier circuit de refroidissement, entraînant ainsi des pertes de charge supplémentaires sur le flux d'air de refroidissement.

Une autre solution consiste à utiliser un circuit de refroidissement commun pour le moteur thermique et l'ensemble de traction électrique. Le circuit de refroidissement du moteur thermique à haute température, entre 90 et 115°C, est utilisé pour refroidir les composants électriques de l'ensemble de traction électrique à plus basses températures, entre 70 et 80°C. Un tel système de refroidissement utilise un unique radiateur comprenant une entrée et deux sorties.

On peut se référer à cet égard à la demande de brevet français 2 844 224 (Renault) qui décrit l'utilisation d'un seul circuit de refroidissement permettant d'assurer deux niveaux de température pour le fluide caloporteur, d'une part pour le refroidissement du moteur thermique à haute température, par exemple de 90 à 115°C, et d'autre part pour le refroidissement des composants de l'ensemble de traction électrique à plus basse température, par exemple de 70 à 80°C. Le système de refroidissement comprend un seul radiateur présentant une seule entrée et deux sorties de façon à définir un circuit principal et un circuit auxiliaire. Une vanne électrostatique à deux voies associée à une vanne thermostatique à trois voies permet de gérer l'ensemble du système de refroidissement et d'obtenir pour le fluide caloporteur les températures requises à la fois pour le moteur thermique et pour les composants de l'ensemble de traction électrique. Toutefois la vanne thermostatique à deux voies doit être placée dans le circuit de refroidissement à un endroit particulier et doit être conçue pour s'ouvrir à des températures relativement basses. L'adaptation d'une telle structure à un système de refroidissement d'un véhicule à chaîne de traction hybride entraîne des coûts importants.

Toutefois, le débit du fluide caloporteur dans une telle structure dépend de la température du fluide et non des conditions dynamiques du véhicule automobile, ce qui ne permet pas d'optimiser la consommation de carburant et les performances du moteur électrique.

La présente invention a pour objet d'améliorer davantage les systèmes de refroidissement tout en les simplifiant.

La présente invention a également pour objet d'optimiser la consommation de carburant et de réduire le rejet de dioxyde de carbone en optimisant les performances du moteur électrique.

La présente invention concerne un système de refroidissement pour chaîne de traction hybride d'un véhicule automobile comportant un moteur thermique et un ensemble ou chaîne de traction électrique, comprenant un circuit principal pouvant être parcouru par un fluide caloporteur pour refroidir le moteur thermique à un premier niveau de température et un circuit secondaire pouvant être parcouru par un fluide caloporteur pour refroidir l'ensemble de traction électrique à un deuxième niveau de température, inférieur au premier niveau, chacun des circuits comprenant un radiateur capable de refroidir le fluide caloporteur par échange thermique avec un flux d'air, au moins une pompe hydraulique de circulation du fluide caloporteur dans les circuits de refroidissement, et une unité de contrôle électronique capable de commander les pompes hydrauliques.

Selon l'invention, l'unité de contrôle comprend un module de récupération d'informations sur la dynamique du véhicule et un module de pilotage du débit des pompes hydrauliques en fonction de ces informations, un module de commande du changement de mode de motricité en fonction des informations sur la dynamique du véhicule et un module de commande du couple moteur en fonction des informations sur la dynamique du véhicule ou selon une sélection manuelle du conducteur, les informations sur la dynamique du véhicule comprenant la vitesse du véhicule automobile, l'angle de braquage du volant, la pente de la route et l'adhérence au sol.

Ainsi, le débit des pompes est commandé en fonction des conditions d'utilisation du véhicule automobile en roulage, par exemple, en virage, en ligne droite ou en pente, et selon la vitesse du véhicule automobile. Un tel pilotage des pompes permet d'ajuster au mieux le refroidissement de chacun des éléments à refroidir, et d'optimiser la consommation de carburant ainsi que de réduire le rejet de dioxyde de carbone en optimisant les performances du moteur électrique.

Avantageusement, le module de pilotage des pompes hydrauliques comprend un module de calcul de la quantité de chaleur à évacuer par la chaîne de traction électrique et le moteur thermique et un module de détermination d'une consigne de débit en fonction de la quantité de chaleur à évacuer calculée.

Avantageusement, l'unité de contrôle comprend un module de régulation du pilotage des pompes en fonction des commandes de couple moteur, du mode de motricité et du régime moteur.

L'ensemble de traction électrique comprend, par exemple, deux moteurs électriques et deux onduleurs associés chacun à un moteur électrique, et dans lequel le deuxième circuit de refroidissement comprend trois pompes de circulation, disposées respectivement à la sortie du radiateur, à l'entrée des onduleurs et à l'entrée du radiateur.

Selon un deuxième aspect, l'invention concerne un procédé de refroidissement pour chaîne de traction hybride d'un véhicule automobile comportant un moteur thermique et un ensemble de traction électrique, dans lequel on refroidit le moteur thermique à un premier niveau de température et l'ensemble de traction électrique à un deuxième niveau de température, inférieur au premier niveau, on fait circuler le fluide caloporteur par actionnement de pompes hydrauliques de circulation, et on récupère des informations sur la dynamique du véhicule et on commande les pompes hydrauliques en fonction de ces informations.

Les informations sur la dynamique du véhicule comprennent, par exemple, la vitesse du véhicule automobile, l'angle de braquage du volant, la pente de la route et l'adhérence au sol.

Avantageusement, on calcule la quantité de chaleur à évacuer par l'ensemble de traction électrique et le moteur thermique et on détermine une consigne de débit en fonction de la quantité de chaleur à évacuer calculée.

Selon un mode de réalisation, on commande le changement de mode de motricité en fonction des informations sur la dynamique du véhicule et on commande le couple moteur en fonction des informations sur la dynamique du véhicule ou selon une sélection manuelle du conducteur.

Par exemple, on régule le pilotage des pompes en fonction des commandes de couple moteur et du mode de motricité et du régime moteur.

La présente invention sera mieux comprise à la lecture de la description de quelques modes de réalisation, donnés à titre d'exemples nullement limitatifs et illustrés sur les dessins annexés :
- la figure 1 est une vue schématique d'un système de refroidissement selon l'invention; et
- la figure 2 est une vue détaillée de l'unité de commande de la figure 1.

Dans la suite de la description, le terme « moteur électrique » définit toutes les machines qui convertissent l'énergie électrique en énergie mécanique, ou de l'énergie mécanique en énergie électrique.

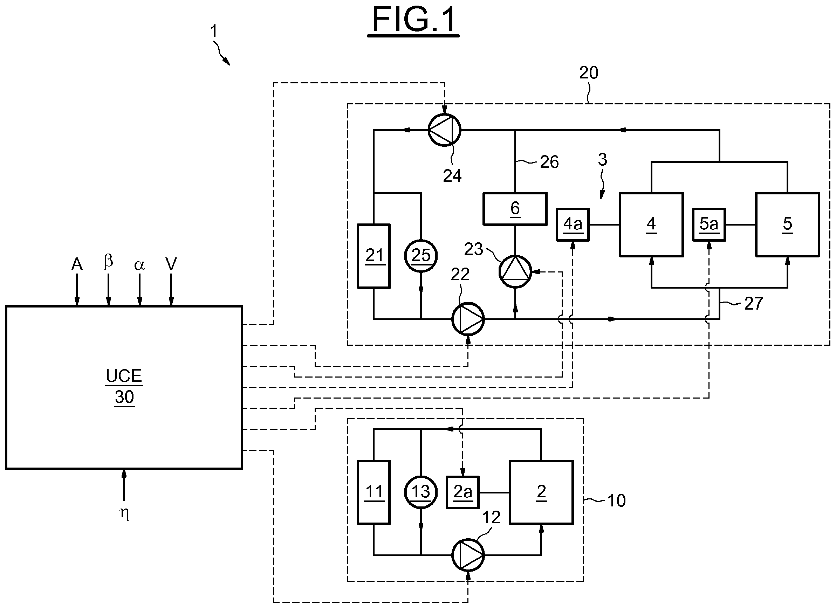

Tel qu'illustré schématiquement sur la figure 1, un système de refroidissement, référencé 1 dans son ensemble, est destiné au refroidissement d'une chaîne de traction ou de propulsion hybride d'un véhicule automobile (non représenté) comportant d'une part un moteur thermique 2 et d'autre part, un ensemble ou chaîne de traction ou propulsion électrique 3. Tel qu'illustré, l'ensemble de traction électrique 3 comprend deux moteurs électriques 4, 5 associés à des composants électroniques de puissance, tels que des onduleurs 6. Chaque moteur électrique 4, 5 est alimenté par une batterie électrique (non représentée) et est implanté au niveau d'une roue arrière (non représentée) du véhicule automobile. Les moteurs électriques 4, 5 sont du type asynchrone commandés par un dispositif de commande tel que des onduleurs 6 équipés d'interrupteurs électroniques (non représentés), par exemple des transistors de type VMOS (Vertical Metal Oxider Semiconductor) ou IGBT (Insulated Gate Bipolar Transistor, afin de faire varier leur vitesse de rotation. Les onduleurs 6 et les moteurs électriques 4, 5 ont des pertes de chaleur telles que les pertes fer ou les pertes par courants de Foucault qui se traduisent par un échauffement. Afin d'éviter une destruction due à réchauffement excessif ou une dégradation de la performance, il est nécessaire de refroidir les onduleurs 6 et les moteurs électriques 4, 5.

Les moteurs électriques 4, 5 étant découplés, ils ne nécessitent pas un refroidissement identique, par exemple, lors d'un virage du véhicule automobile, un des moteurs électriques peut être plus sollicité que l'autre moteur électrique. En variante, les moteurs électriques 4, 5 peuvent être découplés lorsqu'ils fonctionnent avec le moteur thermique, c'est-à-dire en mode de propulsion hybride, et couplés en mode électrique.

Les plages de température de fonctionnement du moteur thermique 2, des moteurs électriques 4, 5 et des onduleurs 6 étant différentes, il est nécessaires de refroidir différemment ces différents composants.

Le système de refroidissement 1 comprend un premier circuit de refroidissement 10 du moteur thermique 2 et un deuxième circuit de refroidissement 20 des moteurs électriques 4, 5 et des onduleurs 6.

Le premier circuit de refroidissement 10 comprend un radiateur 11 et une pompe hydraulique 12 de circulation d'un fluide caloporteur dans le premier circuit de refroidissement 10.

On dispose également, dans l'écoulement du fluide caloporteur, un vase d'expansion 13 sous la forme d'un bocal hermétiquement fermé, traversé par le fluide caloporteur. Un tel organe permet la dilatation de l'eau utilisée à titre de fluide caloporteur grâce au maintien d'un certain volume d'air compressible à l'intérieur. Il permet également de maintenir sous pression l'ensemble du circuit de refroidissement 10, afin d'éviter tout risque de cavitation de la pompe de circulation 12 entraînée par le moteur thermique 2. Le vase d'expansion 13 est monté en parallèle du radiateur 11 de façon à limiter au maximum le volume de fluide caloporteur à réchauffer, ce qui permet de réduire l'énergie nécessaire au fonctionnement de l'ensemble en diminuant la durée de montée en température du moteur thermique 2.

Le refroidissement du moteur thermique 2 est assuré par la circulation du fluide caloporteur dans le radiateur 11 sous l'action de la pompe hydraulique 12. Le moteur thermique 2 est par exemple disposé au niveau du train avant du véhicule automobile.

Le deuxième circuit de refroidissement 20 comprend un radiateur 21 et trois pompes hydrauliques 22, 23, 24 de circulation d'un fluide caloporteur dans le circuit de refroidissement 20. Un vase d'expansion 25 est monté en parallèle du radiateur 21 dans le deuxième circuit de refroidissement 20.

Une première pompe hydraulique 22 est montée en sortie du radiateur 21 en aval de la séparation entre une première branche 26 comportant les onduleurs 6 et une deuxième branche 27 comportant les moteurs électriques 4, 5, une deuxième pompe hydraulique 23 est montée dans la première branche 26 en entrée des onduleurs 6, et une troisième pompe hydraulique 24 est montée en entrée du radiateur 21.

Le refroidissement de l'ensemble de traction électrique 3 est assuré par la circulation du fluide caloporteur qui est prélevé dans le radiateur 21 par la première pompe hydraulique 22 et envoyé vers les première et deuxième branches 26, 27. La deuxième pompe hydraulique 23 prélève le fluide caloporteur en sortie de la première pompe 22 pour l'envoyer dans les onduleurs 6.

A la sortie des moteurs électriques 4, 5 et des onduleurs 6, le fluide caloporteur qui a subi un échauffement est envoyé dans le radiateur 21 par la troisième pompe 24 pour le refroidir par échange thermique avec le courant d'air qui le traverse.

Les radiateurs 11, 21 servent à échanger la chaleur des fluides caloporteurs des circuits de refroidissement en évacuant la chaleur du fluide caloporteur par l'air qui traverse lesdits radiateurs. Un radiateur comprend généralement un collecteur d'entrée du fluide, une boîte à eau et un collecteur de sortie du fluide (non représentés). Le fluide caloporteur passe dans une pluralité de canaux entourés d'ailettes dans le but de favoriser les échanges thermiques avec l'air passant entre les ailettes. De l'air peut, par exemple, être soufflé sur chacun des radiateurs par l'intermédiaire d'un groupe moto ventilateur (non représenté) disposé en amont de chacun des radiateurs 11, 21. A titre d'exemple non limitatif, chacun des radiateurs 11, 21 peut comprendre des clapets (non représentés) permettant l'ouverture et la fermeture des canaux en fonction du fonctionnement du moteur. Les clapets sont, par exemple, commandés par des actionneurs (non représentés) reliés à un calculateur de gestion et de commande 2a, 4a, 5a du moteur thermique 2 et de l'ensemble de traction électrique 3. La mise en fonctionnement des moteurs 2, 4, 5 provoque, par l'intermédiaire des actionneurs, l'ouverture des clapets. On notera que l'on pourrait utiliser tout autre radiateur servant à échanger de la chaleur entre le fluide caloporteur le traversant et l'air extérieur au radiateur.

Le premier radiateur 11 est en général parcouru par un premier fluide de refroidissement dont la température est d'environ 100°C et le deuxième radiateur 21 est en général parcouru par un deuxième fluide caloporteur dont la température est de l'ordre de 50 à 70°C. Les moteurs électriques 4, 5 peuvent ainsi fonctionner en basse température, ce qui accroît leur rendement et prolonge leur durée de vie.

Le système de refroidissement comprend un premier et un deuxième fluide caloporteur, pouvant être identiques, tel que par exemple de l'eau additionnée de glycol dont le sens de l'écoulement est indiqué par des flèches. On notera que le fluide caloporteur circulant dans le premier circuit de refroidissement 10 pourrait être différent du fluide caloporteur circulant dans le deuxième circuit de refroidissement 20.

A titre d'exemple non limitatif, on peut prévoir des vannes (non représentées) pour faire circuler dans le moteur thermique 2 le fluide de refroidissement réchauffé par son passage dans les moteurs électriques 4, 5 afin de préchauffer le moteur thermique avant son démarrage. Ce préchauffage évite le démarrage à froid du moteur thermique qui accroît la consommation de carburant et augmente les émissions d'éléments polluants. En revanche, lorsque les moteurs thermiques et électriques sont à leurs températures de fonctionnement nominal, les vannes sont fermées pour permettre au moteur électrique de fonctionner à une température inférieure à celle du moteur thermique.

Le système de refroidissement 1 comprend une unité de contrôle électronique 30, appelée « UCE », permettant de commander les pompes hydrauliques 12, 22, 23, 24 et les calculateurs 2a, 4a, 5a des moteurs thermique 2 et électriques 4, 5. Les commandes de l'UCE 30 sont illustrées en traits pointillés sur la figure 1. L'UCE 30 reçoit en entrée des informations fournies par différents capteurs (non représentés) sur la dynamique du véhicule, c'est-à-dire sur la vitesse V du véhicule automobile, l'angle de braquage du volant a, la pente de la route β et l'adhérence au sol A du véhicule automobile. L'UCE 30 reçoit par ailleurs la valeur du régime η de chacun des moteurs 2, 4, 5.

L'angle de braquage du volant a, exprimé en degré, représente les angles entre une roue et le châssis.

La pente de la route β, exprimée en pourcentage, représente le dénivelé d'une route pour un déplacement horizontal de 100m.

La valeur de l'adhérence A des pneus sur la chaussée est déterminée par l'intermédiaire de capteurs de vitesse des roues détectant le patinage des roues sur le sol.

L'adhérence est fonction de la vitesse de déplacement, du type et de l'état des pneus (largeur, type de gomme ou caoutchouc, etc.), ainsi que l'état de la route (route sèche, mouillée). Le coefficient d'adhérence peut varier de 0,8 à 1,5. Une méthode utilisée pour détecter le degré d'adhérence est la mesure du glissement des roues via les données du système antiblocage également nommé « ABS », comme la vitesse au niveau des roues.

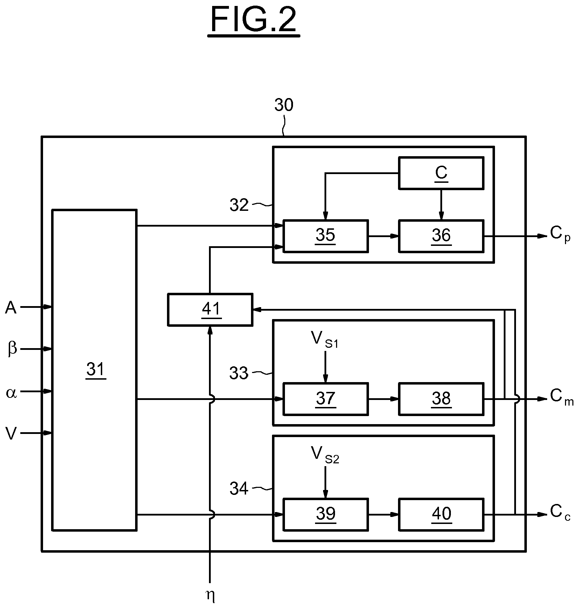

Telle qu'illustrée sur la figure 2, l'UCE 30 comprend un module de récupération d'informations 31 sur la dynamique du véhicule, un module 32 de pilotage du débit des pompes hydrauliques 12, 22, 23, 24 en fonction de ces informations, un module 33 de commande du changement de mode de motricité en fonction des informations sur la dynamique du véhicule et un module 34 de commande du couple moteur en fonction des informations sur la dynamique du véhicule. Selon une variante non représentée, le conducteur peut imposer le mode de motricité en sélectionnant manuellement le mode de motricité par l'intermédiaire d'un bouton ou tout autre moyen de commande.

Les modes de motricité peuvent être choisis parmi le mode de fonctionnement avec le moteur thermique 2 seul, le mode de fonctionnement avec les moteurs électriques 4, 5 seuls, ou le mode de fonctionnement avec les moteurs thermique 2 et électriques 4, 5 combinés.

Le module 32 de pilotage des pompes hydrauliques 12, 22, 23, 24 comprend un module de calcul 35 de la quantité de chaleur à évacuer par la chaîne de traction électrique 3 et le moteur thermique 2 et un module de détermination 36 d'une consigne de débit Cₚ en fonction de la quantité de chaleur à évacuer calculée. Le module de détermination 36 de la consigne de débit Cₚ reçoit des cartographies C relatives à chacun des moteurs 2, 4, 5 et onduleurs 6 afin de déterminer à quel débit la pompe hydraulique associée doit fonctionner afin de garantir un refroidissement suffisant.

La consigne de débit Cₚ est appliquée individuellement à chacune des pompes hydrauliques 12, 22, 23, 24, chaque pompe ayant sa propre consigne de débit Cₚ à respecter.

Sachant que la température du fluide caloporteur du premier circuit de refroidissement 10 et du deuxième circuit de refroidissement 20 doit rester inférieure, respectivement, à 90°C et à 60°C, les pompes hydrauliques 12, 22, 23, 24 sont chacune pilotées avec un débit prédéterminé à l'aide de l'une des cartographies C.

Par exemple pour le deuxième circuit de refroidissement 20, l'onduleur 6 et les deux moteurs électriques 4, 5 doivent rester dans la plage de fonctionnement nominal, c'est-à-dire les températures internes des moteurs 4, 5 et de l'onduleur 6 doivent rester en dessous d'une valeur de fonctionnement en mode dégradé, par exemple 70°C. Le débit des pompes hydrauliques 22, 23, 24 doit être à 60% du débit maximal des pompes hydrauliques 22, 23, 24. En cas d'augmentation de la température interne des moteurs 4, 5 et de l'onduleur 6, augmentation qui pourrait entraîner la dégradation de ces éléments, le débit des pompes hydrauliques 22, 23, 24 doit être à 100% du débit maximal.

En fonction des informations dynamique du véhicule (la vitesse V du véhicule automobile, l'angle de braquage du volant a, la pente de la route β et l'adhérence au sol A du véhicule automobile) les consignes de débit Cₚ varient. A titre d'exemple, sur une pente montante à faible vitesse, le débit des pompes hydrauliques 22, 23, 24 est à 80% du débit maximal. Dans le cas d'une pente descendante à vitesse maximale autorisée, le débit sera ramené à 50% du débit maximal. En cas de faible adhérence A, la vitesse sera réduite, alors le débit des pompes hydrauliques 22, 23, 24 sera ramené à 90% du débit maximal, pour permettre aux moteurs électriques 4, 5 de délivrer toute leur puissance.

Les informations d'angle de braquage du volant α et de vitesse V du véhicule automobile influencent le changement de mode de motricité (thermique, hybride ou électrique) et donc les éléments à refroidir. Le débit des pompes hydrauliques 12, 22, 23, 24 est fixé, également, en fonction de ces informations.

Le module de commande 33 du changement de mode de motricité du véhicule comprend un comparateur 37 comparant les informations reçues du module de récupération d'informations 31 avec des valeurs seuils Vₛ₁ et un module de détermination du mode de motricité 38 transmettant une consigne de commande du mode de motricité C_{M} aux calculateurs 2a, 4a, 5a des moteurs 2, 4, 5.

Le module de commande 34 du couple moteur comprend un comparateur 39 comparant les informations reçues du module de récupération d'informations 31 avec des valeurs seuils Vₛ₂ et un module de détermination du couple 40 transmettant une consigne de commande du couple Cc aux calculateurs 2a, 4a, 5a des moteurs 2, 4, 5.

L'UCE 30 comprend un module de régulation 41 du circuit de refroidissement en fonction des consignes de commande du mode de motricité C_{M} et de couple Cc et du régime η de chaque moteur 2, 4, 5, afin de réguler le pilotage du débit des pompes hydrauliques 12, 22, 23, 24.

Les pompes hydrauliques 12, 22, 23, 24 peuvent être commandées en modulation de largeur d'impulsions, dit « MLI » (en terme anglo-saxon « *Pulse Width Modulation »,* soit *PWM*). Cette technique de commande permet de générer des signaux continus à l'aide de circuits à fonctionnement tout ou rien par l'intermédiaire d'un générateur de créneaux et d'un filtre passe-bas comprenant par exemple une résistance et une capacité. Ainsi, le pilotage des pompes hydrauliques est réalisé de manière douce sans à-coups, et peut être réalisé à l'aide d'un microcontrôleur programmable (non représenté).

Ainsi, la circulation du fluide caloporteur est assurée par le pilotage des différentes pompes commandées par l'UCE 30 en fonction des informations sur la dynamique du véhicule.

Le moteur thermique 2, les moteurs électriques 4, 5 et les onduleurs 6 sont donc refroidis de manière efficace sans gaspillage grâce à la récupération des conditions de roulage du véhicule automobile.

On pourrait prévoir que les radiateurs 11, 21 des circuits de refroidissement soient utilisés pour réchauffer l'habitacle du véhicule automobile.

## Revendications

1. Système de refroidissement pour chaîne de traction hybride d'un véhicule automobile comportant un moteur thermique (2) et un ensemble de traction électrique (3), comprenant un circuit principal (10) pouvant être parcouru par un fluide caloporteur pour refroidir le moteur thermique (2) à un premier niveau de température et un circuit secondaire (20) pouvant être parcouru par un fluide caloporteur pour refroidir l'ensemble de traction électrique (3) à un deuxième niveau de température, inférieur au premier niveau, chacun des circuits (10, 20) comprenant un radiateur (11, 21) capable de refroidir le fluide caloporteur par échange thermique avec un flux d'air, au moins une pompe hydraulique (12, 22, 23, 24) de circulation du fluide caloporteur dans les circuits de refroidissement (10, 20), et une unité de contrôle électronique (30) capable de commander les pompes hydrauliques (12, 22, 23, 24), **caractérisé en ce que** l'unité de contrôle (30) comprend un module de récupération d'informations (31) sur la dynamique du véhicule et un module de pilotage (32) du débit des pompes hydrauliques (12, 22, 23, 24) en fonction de ces informations, et **en ce que** l'unité de contrôle (30) comprend un module de commande du changement de mode de motricité (33) en fonction des informations sur la dynamique du véhicule ou selon une sélection manuelle du conducteur, les informations sur la dynamique du véhicule comprenant la vitesse du véhicule automobile (V), l'angle de braquage du volant (α), la pente de la route (β) et l'adhérence au sol (A).

2. Système de refroidissement selon la revendication 1, dans lequel le module de pilotage (32) des pompes hydrauliques (12, 22, 23, 24) comprend un module de calcul (35) de la quantité de chaleur à évacuer par l'ensemble de traction électrique (3) et le moteur thermique (2), et un module de détermination (36) d'une consigne de débit (Cₚ) en fonction de la quantité de chaleur à évacuer calculée.

3. Système de refroidissement la revendication 1 ou 2, dans lequel l'unité de contrôle (30) comprend un module de commande du couple moteur (34) en fonction des informations sur la dynamique du véhicule.

4. Système de refroidissement selon l'une quelconque des revendications précédentes, dans lequel l'unité de contrôle (30) comprend un module de régulation (41) du pilotage des pompes (12, 22, 23, 24) en fonction des commandes de couple moteur (Cₘ), du mode de motricité (C_{c}) et du régime moteur (η).

5. Système de refroidissement selon l'une quelconque des revendications précédentes, dans lequel l'ensemble de traction électrique (3) comprend deux moteurs électriques (4, 5) et deux onduleurs (6) associés chacun à un moteur électrique (4, 5), et dans lequel le deuxième circuit de refroidissement (20) comprend trois pompes de circulation (22, 23, 24), disposées respectivement à la sortie du radiateur (21), à l'entrée des onduleurs (6) et à l'entrée du radiateur (21).

6. Procédé de refroidissement pour chaîne de traction hybride d'un véhicule automobile comportant un moteur thermique (2) et un ensemble de traction électrique (3), dans lequel on refroidit le moteur thermique (2) à un premier niveau de température et l'ensemble de traction électrique (3) à un deuxième niveau de température, inférieur au premier niveau, et on fait circuler le fluide caloporteur par actionnement de pompes hydrauliques (12, 22, 23, 24) de circulation, **caractérisé en ce que** l'on récupère des informations sur la dynamique du véhicule et on commande les pompes hydrauliques (12, 22, 23, 24) en fonction de ces informations, les informations sur la dynamique du véhicule comprenant la vitesse du véhicule automobile (V), l'angle de braquage du volant (α), la pente de la route (β) et l'adhérence au sol (A).

7. Procédé de refroidissement selon la revendication 6, dans lequel on calcule la quantité de chaleur à évacuer par l'ensemble de traction électrique (3) et le moteur thermique (2) et on détermine une consigne de débit (Cₚ) en fonction de la quantité de chaleur à évacuer calculée.

## Patentansprüche

1. Kühlungssystem für Hybridantriebsstrang eines Kraftfahrzeugs, der eine Brennkraftmaschine (2) und eine elektrische Antriebsanordnung (3) umfasst, das einen Primärkreis (10), durch den ein Wärmeaustauschfluid fließen kann, um die Brennkraftmaschine (2) auf ein erstes Temperaturniveau zu kühlen, und einen Sekundärkreis (20), durch den ein Wärmeaustauschfluid fließen kann, um die elektrische Antriebsanordnung (3) auf ein zweites Temperaturniveau, das niedriger als das erste Niveau ist, zu kühlen, umfasst, wobei beide Kreise (10, 20) einen Kühlkörper (11, 21), der das Wärmeaustauschfluid durch Wärmeaustausch mit einem Luftstrom kühlen kann, wenigstens eine Hydraulikpumpe (12, 22, 23, 24) zum Umwälzen des Wärmeaustauschfluids in den Kühlungskreisen (10, 20) und eine elektronische Steuereinheit (30), die die Hydraulikpumpen (12, 22, 23, 24) steuern kann, umfasst, **dadurch gekennzeichnet, dass** die Steuereinheit (30) ein Modul zum Erhalten von Informationen (31) über die Dynamik des Fahrzeugs und ein Modul (32) zum Vorsteuern des Förderstroms der Hydraulikpumpen (12, 22, 23, 24) als Funktion dieser Informationen umfasst und dass die Steuereinheit (30) ein Modul zum Steuern des Änderns des Antriebsmodus (33) als Funktion der Informationen über die Dynamik des Fahrzeugs oder einer manuellen Auswahl des Fahrers umfasst, wobei die Informationen über die Dynamik des Fahrzeugs die Geschwindigkeit des Kraftfahrzeugs (V), den Einschlagwinkel des Lenkrades (α), die Steigung der Straße (β) und die Haftung auf dem Boden (A) enthalten.

2. Kühlungssystem nach Anspruch 1, wobei das Vorsteuermodul (32) für die Hydraulikpumpen (12, 22, 23, 24) ein Modul (35) zum Berechnen der von der elektrischen Antriebsanordnung (3) und von der Brennkraftmaschine (2) abzuführenden Wärmemenge und ein Modul (36) zum Bestimmen eines Sollförderstroms (Cₚ) als Funktion der berechneten abzuführenden Wärmemenge umfasst.

3. Kühlungssystem nach Anspruch 1 oder 2, wobei die Steuereinheit (30) ein Modul zum Steuern des Antriebsdrehmoments (34) als Funktion der Informationen über die Dynamik des Fahrzeugs umfasst.

4. Kühlungssystem nach einem der vorhergehenden Ansprüche, wobei die Steuereinheit (30) ein Modul (41) zum Regulieren der Vorsteuerung der Pumpen (12, 22, 23, 24) als Funktion der Steuerungen des Antriebsdrehmoments (Cₘ), des Antriebsmodus (C_{c}) und der Kraftmaschinendrehzahl (η) umfasst.

5. Kühlungssystem nach einem der vorhergehenden Ansprüche, wobei die elektrische Antriebsanordnung (3) zwei Elektromotoren (4, 5) und zwei Gleichrichter (6), die jeweils einem Elektromotor (4, 5) zugeordnet sind, umfasst, wobei der zweite Kühlungskreis (20) drei Umwälzpumpen (22, 23, 24) umfasst, die am Ausgang des Kühlkörpers (21), am Eingang des Gleichrichters (6) bzw. am Eingang des Kühlkörpers (21) angeordnet sind.

6. Kühlungsverfahren für einen Hybridantriebsstrang eines Kraftfahrzeugs, der eine Brennkraftmaschine (2) und eine elektrische Antriebsanordnung (3) umfasst, wobei die Brennkraftmaschine (2) auf ein erstes Temperaturniveau gekühlt wird und die elektrische Antriebsanordnung (3) auf ein zweites Temperaturniveau, das niedriger als das erste Niveau ist, gekühlt wird und das Wärmeaustauschfluid durch Betätigung von Umwälzhydraulikpumpen (12, 22, 23, 24) umgewälzt wird, **dadurch gekennzeichnet, dass** Informationen über die Dynamik des Fahrzeugs erhalten werden und die Hydraulikpumpen (12, 22, 23, 24) als Funktion dieser Informationen gesteuert werden, wobei die Informationen über die Dynamik des Fahrzeugs die Geschwindigkeit des Kraftfahrzeugs (V), den Einschlagwinkel des Lenkrades (α), die Steigung der Straße (β) und die Haftung auf dem Boden (A) umfassen.

7. Kühlungsverfahren nach Anspruch 6, wobei die von der elektrischen Antriebsanordnung (3) und von der Brennkraftmaschine (2) abzuführende Wärmemenge berechnet wird und ein Sollförderstrom (Cₚ) als Funktion der berechneten abzuführenden Wärmemenge bestimmt wird.

## Claims

1. Cooling system for a hybrid powertrain of a motor vehicle comprising an internal combustion engine (2) and an electric traction assembly (3) comprising a main circuit (10) which is able to be traversed by a heat transfer fluid in order to cool the internal combustion engine (2) to a first temperature level and a secondary circuit (20) which is able to be traversed by a heat transfer fluid in order to cool the electric traction assembly (3) to a second temperature level, lower than the first level, each of the circuits (10, 20) comprising a radiator (11, 21) which is capable of cooling the heat transfer fluid by heat exchange with an air flow, at least one hydraulic pump (12, 22, 23, 24) for circulating the heat transfer fluid in the cooling circuits (10, 20) and an electronic control unit (30) which is capable of controlling the hydraulic pumps (12, 22, 23, 24), **characterized in that** the control unit (30) comprises a module for recovering information (31) on the dynamics of the vehicle and a module for controlling (32) the flow rate from the hydraulic pumps (12, 22, 23, 24) as a function of this information, and **in that** the control unit (30) comprises a module for controlling the change of drive mode (33) as a function of the information on the dynamics of the vehicle or according to a manual selection by the driver, the information on the dynamics of the vehicle comprising the speed of the motor vehicle (V), the steering angle of the steering wheel (α), the gradient of the road (β) and the adhesion to the ground (A).

2. Cooling system according to Claim 1, in which the module for controlling (32) the hydraulic pumps (12, 22, 23, 24) comprises a module for calculating (35) the quantity of heat to be discharged by the electric traction assembly (3) and the internal combustion engine (2) and a module for determining (36) a flow rate set point (C_{P}) as a function of the calculated quantity of heat to be discharged.

3. Cooling system according to Claim 1 or 2, in which the control unit (30) comprises a module for controlling the engine torque (34) as a function of the information on the dynamics of the vehicle.

4. Cooling system according to any one of the preceding claims, in which the control unit (30) comprises a module for regulating (41) the control of the pumps (12, 22, 23, 24) as a function of the engine torque controls (Cₘ), the drive mode (C_{c}) and the engine speed (η).

5. Cooling system according to any one of the preceding claims, in which the electric traction assembly (3) comprises two electric motors (4, 5) and two inverters (6), each associated with an electric motor (4, 5), and in which the second cooling circuit (20) comprises three circulating pumps (22, 23, 24) respectively arranged at the outlet of the radiator (21), at the inlet of the inverters (6) and at the inlet of the radiator (21).

6. Cooling method for a hybrid powertrain of a motor vehicle comprising an internal combustion engine (2) and an electric traction assembly (3), in which the internal combustion engine (2) is cooled to a first temperature level and the electric traction assembly (3) is cooled to a second temperature level, lower than the first level, and the heat transfer fluid is circulated by actuating hydraulic circulating pumps (12, 22, 23, 24), **characterized in that** information is recovered on the dynamics of the vehicle and the hydraulic pumps (12, 22, 23, 24) are controlled as a function of this information, the information on the dynamics of the vehicle comprising the speed of the motor vehicle (V), the steering angle of the steering wheel (α), the gradient of the road (β) and the adhesion to the ground (A).

7. Cooling method according to Claim 6, in which the quantity of heat to be discharged by the electric traction assembly (3) and the internal combustion engine (2) is calculated and a flow rate set point (Cₚ) is determined as a function of the calculated quantity of heat to be discharged.
